# EUROPÄISCHE PATENTSCHRIFT

(11) **EP 1 674 437 B1**
(45) Veröffentlichungstag und Bekanntmachung des Hinweises auf die Patenterteilung: **13.02.2008**
(21) Anmeldenummer: 05090351.7
(22) Anmeldetag: 20.12.2005
(51) Int. Cl.: C04B 37/00, C04B 35/622, B29C 65/02

(54) **Verfahren zur Herstellung von keramischen Formkörpern auf Basis sinterfähiger Pulver**
Process of manufacture of shaped ceramic bodies on the basis of sinterable powders
Procédé pour la production d' articles ceramiques formés de poudre frittable

(30) Priorität: 21.12.2004 DE 102004062645
(43) Veröffentlichungstag der Anmeldung: 28.06.2006
(73) Patentinhaber: BAM Bundesanstalt für Materialforschung und- Prüfung, 12205 Berlin (DE); Helmut König Technische Keramik GbR, 34474 Diemelstadt (DE)
(72) Erfinder: König, Helmut, 34474 Diemelstadt (DE); Paulick, Carl, 16321 Bernau (DE); Steinborn, Gabriele, Dr., 14167 Berlin (DE); Wäsche, Rolf, Dr., 10829 Berlin (DE)
(74) Vertreter: Walter, Wolf-Jürgen

(56) Entgegenhaltungen:
- EP-A- 0 357 491
- US-A- 4 608 087
- US-A- 4 853 053
- US-A1- 2002 117 249
- DATABASE WPI Section Ch, Week 200362 Derwent Publications Ltd., London, GB; Class L02, AN 2003-649376 XP002370805 & JP 2003 128473 A (NIKKATO KK) 8. Mai 2003 (2003-05-08)
- PATENT ABSTRACTS OF JAPAN Bd. 2003, Nr. 09, 3. September 2003 (2003-09-03) & JP 2003 128473 A (NITSUKATOO:KK), 8. Mai 2003 (2003-05-08)

## Beschreibung

Die Erfindung betrifft ein Verfahren zur Herstellung von keramischen Formkörpern auf Basis sinterfähiger Pulver.

Sinterwerkstoffe zeichnen sich durch wesentliche Eigenschaften aus, wie z. B. mechanische Festigkeit, Härte, Zähigkeit, Warm- und Korrosionsfestigkeit. Mit einigen Ausnahmen können Sinterwerkstoffe nicht durch Umschmelzen oder Schmieden geformt werden, wodurch die geometrische Gestaltung von Bauteilen erheblich eingeschränkt wird.

In der Vergangenheit wurden eine Reihe von Verfahren entwickelt, um Komponenten aus gesinterten Werkstoffen zu fügen. Hierzu zählen das Fügen mittels Glasloten, das Metallisieren mit nachfolgendem Löten, sowie das Aktivlöten. Diese Verfahren erreichen in der Regel Festigkeiten bis 100 MPa, d.h. ungefähr ein Viertel bis ein Achtel der Biegebruchfestigkeit üblicher Sinterwerkstoffe wie Aluminiumoxid oder Siliziumcarbid. Außerdem ist die chemische Beständigkeit der Verbindungszone in der Regel deutlich geringer als die der Ausgangswerkstoffe. Bei etlichen Werkstoffkombinationen entsteht durch die Lötung eine Versprödung der Randbereiche der Fügezone. Da es sich bei den Loten um Materialien handelt, die nicht die chemische Beständigkeit der Keramikwerkstoffe haben, ist weiterhin die Korrosionsfestigkeit entsprechend gefügter Bauteile geringer als die von monolithischen Komponenten.

Weiterhin existieren Verfahren, Bauteile mittels "Fügefolien", die aus besonders sinteraktiven Stoffen bestehen, zu verbinden. In der Literatur werden Werte von bis zu 140 MPa für die 4Punkt-Biegebruchfestigkeit derartiger Verbindungen angegeben. Solche Verbindungen sind meistens jedoch nicht vollständig gas- bzw. vakuumdicht.

Die genannten Verfahren setzen in der Regel eine genaue Bearbeitung der Passflächen an der Verbindungsstelle voraus. Außerdem werden weitere Prozessschritte mit thermischen Behandlungen notwendig, die sich bei einigen Werkstoffen wie z.B. Zirkonoxid nachteilig auf das Gefüge und die Festigkeit auswirken können.

Alternativ wurde ein Verfahren entwickelt, Aluminiumoxidkeramiken mit Laserlicht zu schweißen. Hierzu ist es jedoch notwendig, die an die Schweißnaht grenzenden Bereiche mit zu erwärmen, dass ein kontrollierter Temperaturgradient entsteht, um Rissbildung durch Thermoschocks zu vermeiden. Schon bei einfachen Geometrien ergibt sich dadurch die Notwendigkeit, einen zweiten Laser einzusetzen. Abgesehen von den Kosten der Bearbeitung gelingt das Laserschweißen zur Zeit nur bei Aluminiumoxidkeramiken mit Glasphasenanteilen, d.h. Werkstoffen mit weniger als 97% Al₂0₃-Anteil. Hochreines Al₂0₃, Zirkonoxid und Nitridwerkstoffe lassen sich nicht mit diesem Verfahren verbinden.

Alternativ zu Methoden, bei denen Lote oder Fügefolien mit gesinterten Bauteilen eingesetzt werden, sind in der Literatur zahlreiche Verfahren angegeben bei denen Grünteile durch Aufschrumpfen während des Sinterprozesses verbunden werden. Solche Verfahren setzen eine axiale Geometrie, sowie die genaue Bearbeitung der Grünkörper und die exakte Beherrschung der Sinterschwindungen der jeweiligen Teile voraus.

In der JP 02258205 ist ein Verfahren beschrieben, zwei in einem Schlickergussprozess hergestellte Teile miteinander zu verbinden, indem die Passflächen erneut mit demselben Schlicker beschichtet werden, aufeinander gepresst und unter Druck getrocknet werden. Durch die vermutlich hohen Glasanteile in den Grünkörpern, die zu keiner Hochleistungskeramik führen, ist dies meist unproblematisch.

In der US 6,620,272 ist beschrieben, dass zunächst die Fügezone der Grünteile über den Schmelzpunkt des Bindemittels erwärmt wird, worauf die Grünteile unter Normaldruck in Verbindung mit axialer Vibration gefügt werden.

In der JP 09104014 ist ein Verfahren beschrieben, Spritzgussteile durch nachträgliches, erneutes Aufschmelzen der Verbindungszone zu fügen, wobei die zu fügenden Grünkörperbereiche bis unter den Erweichungspunkt erhitzt werden.

Die Erfindung hat zur Aufgabe, ein Verfahren anzugeben, das die Herstellung komplizierter, hochreiner, keramischer Formkörper aus einfacheren Formelementen ermöglicht, wobei der Fügeprozess kraftschlüssige und dichte Verbindungen liefern und in die Formgebung integriert sein soll.

Eine weitere Aufgabe besteht darin, dass die Korrosionsfestigkeit der zusammengesetzten Formelemente nicht schlechter sein soll als die der einzelnen Formelemente.

Die Aufgabe wird gelöst durch ein Verfahren zur Herstellung von keramischen Formkörpern auf Basis sinterfähiger Pulver, dadurch gekennzeichnet, dass man an wenigstens eine Kontaktfläche eines festen ersten keramischen Körpers, der hochreines sinterfähiges Pulver mit einem Reinheitsgrad von > 99 Gew-%, bezogen auf das Pulver, und Bindemittel umfasst, eine Heißgießmasse mit einer Temperatur im Bereich von 60 bis 110 °C vollflächig andrückt, den dabei gebildeten zweiten keramischen Körper nach Abkühlung entformt und anschließend entbindert und bei 500 bis 2000 °C sintert, wobei die Heißgießmasse die gleiche Zusammensetzung wie der erste keramische Körper hat, und der Teilchendurchmesser d₅₀ der Feststoffteilchen in der Heißgießmasse im Bereich von 0,1 bis kleiner 1 µm liegt. Dabei hat das Pulver eine spezifische BET-Oberfläche von ca. 3-8 m²/g.

Unter "sinterfähigem Pulver" werden Pulver aus Aluminiumoxid, Zirkoniumoxid, Magnesiumoxid, Siliciumnitrid, Aluminiumnitrid, Siliciumcarbid oder deren Mischungen (z.B. Sialone) verstanden, insbesondere solche aus Aluminiumoxid oder Zirkoniumoxid, speziell aus Aluminiumoxid. Sialone sind Pulver aus Siliciumnitrid, Aluminiumoxid und Yttriumoxid. Die Sintertemperatur ist von dem jeweiligen Pulver abhängig und liegt meist im Bereich von 1000-2000 °C. Bei Al₂O₃ liegt sie beispielsweise bei etwa 1500-1700 °C. Die Sinterung führt je nach Sintertemperatur und abhängig von der homogenen Verteilung des Pulvers in dem erkalteten Grünkörper zu einem spannungsfreien, homogenen Gefüge, dessen Festigkeit in der Fügezone der beiden Körper wenigstens 60 %, vorzugsweise 80 % und insbesondere 100 % der Festigkeit des ersten oder zweiten Körpers beträgt. Das bedeutet, dass die Fügezone nahezu oder vollständig die gleiche Festigkeit wie die beiden ursprünglichen Einzelkörper aufweist.

Insbesondere bildet man die Heißgießmasse aus einem sinterfähigen Pulver, das eine Reinheit von wenigstens 99,0 % hat, und flüssigem Bindemittel, und das Pulver liegt in dem Bindemittel deagglomeriert vor und bildet dabei die fließfähige homogene Heißgießmasse. Die Deagglomerierung wird durch entsprechend intensive Mischvorgänge erreicht.

Zur Herstellung einer erfindungsgemäßen Hochleistungskeramik werden hochreine Pulver benötigt. Unter "hochreinem sinterfähigem Pulver" wird ein solches mit >99 Gew-% Gehalt an Metalloxid, -nitrid oder -carbid verstanden, vorzugsweise 99,2-99,9, insbesondere 99,99 Gew-% Metalloxid, z.B. Al₂O₃. Da mit steigender Reinheit das Fügen von keramischen Körpern mit Heißgießmassen immer schwieriger wird wegen des Wegfalls einer sonst vorhandenen Glasphase, war es überraschend, dass mittels des erfindungemäßen Verfahrens auch ohne vorherige Temperaturbehandlung der zu fügenden Teile gute Biegefestigkeiten der gesinterten Formteile erhalten werden konnten. Bekannte Verfahren, die ohne Angabe des Reinheitsgrades des eingesetzten Metalloxids auskommen, arbeiten stets mit solchen, die 3-5 % Verunreinigung (glasphasenbildende Bestandteile) enthalten. Für das erfindungsgemäße Verfahren wird auch keine externe Glasphase eingesetzt, sondern ausschließlich das hochreine Metalloxid mit dem Bindemittel, d.h. ein glasphasenfreies Substanzgemisch.

Es werden Heißgießmassen mit einem Volumenanteil von 45 - 65 % an Pulvern eingesetzt (etwa 80 - 90 Gew-%), deren Korngrößenverteilung einen besonders vorteilhaften d₅₀-Wert von unter 0,8 µm aufweist.

Unter d₅₀-Wert wird ein Wert der Korngrößenverteilung verstanden, bei dem wenigstens 50 Gew-% des Pulvers eine Korngröße unter der angegebenen Größe aufweisen. Die Korngrößenbestimmung erfolgt üblicherweise mit der Laserpartikelanalyse (Mie-Streuung) und einem Malvern® Gerät.

Die o.g. keramischen ersten und zweiten Körper, die noch Bindemittel enthalten, werden hier auch als "Grünkörper" bezeichnet.

Unter "Entbindern" oder "Entbinderung" wird das Austreiben des Bindemittels aus dem Grünkörper zu einem großen Prozentsatz vor der Sinterung verstanden, wobei der Rest des Bindemittels dann beim Sintervorgang ausgetrieben wird. Die Entbinderung findet bei 20-400°C statt und kann mit unterschiedlichen Aufheizgeschwindigkeiten und gegebenenfalls Haltestufen laufen. Bei ZrO₂ z.B. auf 155-165 °C mit 6-8 °C/h, auf 210-225 °C mit 4-5 °C/h, auf 400 °C mit 13-17 °C/h, vorzugsweise auf 160 °C mit 7°C/h, auf 220 °C mit 15 °C/h und auf 400 °C mit 25 °C/h. Eine zusätzliche Haltezeit von 2-4h kann bei 1040-1060 °C erfolgen, vorzugsweise 3h bei 1050 °C.

Die Sinterung erfolgt dann durch Aufheizen mit 280-310 °C auf 1050 °C und mit 35-45 °C auf 1530 °C und Halten bei dieser Temperatur für 0,8-2h, vorzugsweise auf 1050 °C mit 300 °C/h und 40 °C/h auf 1530 °C sowie 1h Haltezeit.
Für Al₂O₃ sind die Werte entsprechend, wobei bei der Entbinderung bis auf ca. 880-910 °C, vorzugsweise 900 °C erhitzt (Haltezeit ca. 1,8-2,2 h) wird, und die Sintertemperatur bei 1660-1670 °C liegt.

Die Heißgießmasse kann mit einer Spritzgussmaschine an die Kontaktfläche eines festen Grünkörpers angedrückt werden, wobei sich der Grünkörper oder zumindest die Kontaktfläche und deren Umgebung vorzugsweise in einer Form befinden.

Ein "fester Körper" ist ein Körper, der eine Temperatur deutlich unterhalb seines Erweichungspunktes in seinen gesamten Volumen bzw. seiner gesamten Oberfläche aufweist, vorzugsweise eine Temperatur unter 45 °C, insbesondere unter 40 °C.

Auf die erfindungsgemäße Weise können plastifizierte Grünkörper aus solchen Heißgießmassen nach der Formgebung und Abkühlung mit weiteren Bauteilen ohne zusätzlichen Aufwand versehen werden, indem ein bereits gefertigtes Element in ein entsprechendes Spritzgusswerkzeug eingesetzt wird und in einem weiteren Spritzgussschritt ein neu hergestelltes Element angesetzt wird. Die injizierte flüssige Masse verbindet sich mit dem vorhandenen festen Teil, bevor das neue Bauteil erstarrt. Unter Verwendung einer Heißgießmasse, wie sie hier beschrieben wird, können die so gefügten Komponenten wie ein einzelnes Bauteil weiterbehandelt werden, und es entsteht an der Nahtstelle ein homogenes und dichtes Gefüge, das dem des Grundwerkstoffes entspricht.

Eine Erwärmung des vorhandenen Grünkörpers an seinem Ende, an das ein neues Formteil angesetzt werden soll, auf eine Temperatur bei oder oberhalb seines/seinem Erweichungspunkt(es), wie bei der JP 09104014, ist erfindungsgemäß nicht erforderlich.

Die Heißgießmasse kann mit einem Druck von 1 bis 50 bar, vorzugsweise 1 bis 10 bar, insbesondere 3 bis 8 bar an den Grünkörper angedrückt werden.

In einer weiteren Ausführungsform der Erfindung wird eine zweite Fläche eines weiteren keramischen Grünkörpers aus hochreinem Aluminiumoxid mit der Fläche des ersten keramischen Grünkörpers wenigstens an einem Punkt oder an einer Kante in Kontakt gebracht, wobei der zwischen den aneinanderstoßenden Flächen beider Körper gebildete freie Raum durch die in den Raum gedrückte Heißgießmasse ausgefüllt wird und ein dabei gebildeter dritter keramischer Grünkörper nach der Abkühlung der Heißgießmasse und gegebenenfalls Entformung und Entbinderung gesintert wird, wobei die beteiligten keramischen Grünkörper und die Heißgießmasse die gleiche Zusammensetzung haben.

Dieses Aneinandersetzen bereits fertiger Grünkörper und das anschließende Verschmelzen mit der Heißgießmasse eignet sich besonders für komplizierte Strukturen und kann gegebenenfalls auch ohne Einsetzen der zu verbindenden Enden in ein Formwerkzeug realisiert werden.

Die bekannten Fügeverfahren setzen eine einfache Geometrie der Kontaktflächen voraus und begrenzen somit den konstruktiven Gestaltungsspielraum erheblich. In der Regel werden keine Festigkeitswerte für die gefügten Bauteile angegeben. Dies lässt vermuten, dass in den wenigsten Fällen zufriedenstellende Festigkeiten der Fügezone erreicht werden. Weiterhin ist anzumerken, dass bei der Formgebung von Sinterwerkstoffen Formgebungs- oder Fügeverfahren auf die zu verarbeitenden keramischen Massen abgestimmt sein müssen bzw. umgekehrt die entsprechenden Prozesse nur mit besonders aufbereiteten Massen funktionieren. In der US 6,620,272 sowie weiteren Patenten finden sich keinerlei Angaben zu den verwendeten Massen, so dass es unmöglich scheint, die Erfindung nachzuvollziehen. Verfahren, bei denen zusätzliche Wärmebehandlungen anfallen (JP 09104014) sind mit erheblichem Aufwand beim Fügen verbunden.

Eine weitere Ausführungsform der Erfindung besteht darin, mehrere Körper dadurch zu verbinden, dass diese benachbart positioniert werden und auf die zu verbindenden Wandstellen Heißgießmasse aufgetragen wird. Eine erfindungsgemäße Heißgießmasse weist hierbei ein strukturviskoses Fließverhalten auf, das es ermöglicht, die Heißgießmasse in der Verbindungszone zu verteilen, ohne dass ein Formwerkzeug benötigt wird. Hierbei lassen sich analog zu bekannten Varianten des Schweißens beliebig verlaufende Nähte herstellen.

Die Heißgießmasse ist vorteilhaft eine solche, die beim Austreiben des Bindemittels (Entbindern) vor dem Sintern des Grünkörpers keine Inhomogenitätsverstärkung zulässt. Die Heißgießmasse umfasst das keramische Pulver und als Bindemittel Paraffine, höhere Fettsäuren (C₁₂-C₂₂) wie z.B. Stearinsäure und gegebenenfalls Wachse, wobei jeweils ein oder mehrere davon eingesetzt werden können. Alternativ kann ein kommerzielles fettsäurehaltiges Produkt wie vorzugsweise Siliplast LP65 (Zschimmer & Schwarz, Deutschland) verwendet werden, vorzugsweise mit einem Zusatz von Wachsen, wie z.B. natürlichen Wachsen wie Carnaubawachs, Candellilawachs, Bienenwachs, Wollwachs, Hartparaffin, Ceresin, Ozokerit.

Es ist weiterhin vorteilhaft, der Heißgießmasse ein Amin zuzusetzen, insbesondere ein solches, ausgewählt aus der Gruppe, bestehend aus C₁-C₄-Alkylaminen, polyfunktionalen Aminen, cyclischen Aminen, Aminderivaten und Gemischen davon. C₁-C₄₋Alkylamine sind beispielsweise Methylamin, Ethylamin, Propylamin und Butylamin. Cyclische Amine sind z.B. Benzylamine. Polyfunktionale Amine sind z.B. Di- oder Trialkylamine oder aromatische Amine mit zwei oder mehreren Aminfunktionen. Handelsprodukte sind z.B. solche der Ancamin®-Reihe von Air Products, USA. Ein bevorzugtes Bindemittel enthält Fettsäuren, Wachse und Amine.

Die Feststoffgehalte in einer solchen Heißgießmasse, die durch Verteilung des keramischen Pulvers, z.B. eines hochreinen Al₂O₃₋Pulvers mittels Rühren z.B. unter Ultraschall bei Temperaturen von 70 bis 100°C bis zur homogenen Verteilung hergestellt wird, liegen bei 45 bis 65 Vol-%, was etwa 80 bis 90 Gew-% entspricht. Die Heißgießmasse muss dabei fließfähig bleiben und im Rührprozess zur Deagglomerierung der Pulverteilchen führen. Durch die entsprechenden Viskositäten wird die Spritzbarkeit auf Niederdruckspritzgussmaschinen gewährleistet.

Die nach Sinterung bei 1200-1750 °C erhaltenen gesinterten Formkörper zeigen im Gefüge der "Schweißnaht", d.h. der Stelle, an der die beiden Grünkörper erfindungsgemäß verbunden wurden, die gleiche Mikrostruktur bzw. das gleiche Gefüge wie im benachbarten Gefüge, und die Naht ist bei REM-Aufnahmen nicht erkennbar. Es werden durch die Erfindung Biegebruchfestigkeiten im Bereich von 200-330 MPa, vorzugsweise 200 - 300 MPa erreicht. (Messung der Vierpunkt-Biegebruchfestigkeit gemäß DIN 843-1)

Die Erfindung soll nachstehend durch Beispiele näher erläutert werden. In der dazugehörigen Zeichnung zeigt
- Fig. 1a: Perspektivansicht eines Gießwerkzeugs mit Abdeckungen zur Herstellung eines Grünkörpers
- Fig. 1b: im Gießwerkzeug nach Fig. 1a hergestellter Grünkörper
- Fig. 1c: im Gießwerkzeug nach Fig. 1a eingesetzter, geteilter Grünkörper
- Fig. 1d: neuer verbundener Grünkörper nach Einspritzen von Heißgießmasse in Gießwerkzeug gemäß Fig. 1c
- Fig. 2a: Schnittbild von Formkörperröhren, eingesetzt in eine Formkörperplatte
- Fig. 2b: Perspektivansicht von Platten mit eingesetzten Röhren gemäß Fig. 2a
- Fig. 3: Schnittansicht eines angesetzten Grünkörpers an einen bereits vorhandenen Grünkörper
- Fig. 4: Schnittansicht eines rechtwinklig in ein Rohr eingesetzten neuen Grünkörpers
- Fig. 5: Perspektivansicht des Fügens zweier Körper mittels drucklos aufgetragener Heißgießmasse
- Fig. 6: Temperatur-Zeit-Diagramm für Entbinderung und Sintern von Al₂O₃.

### Beispiel 1

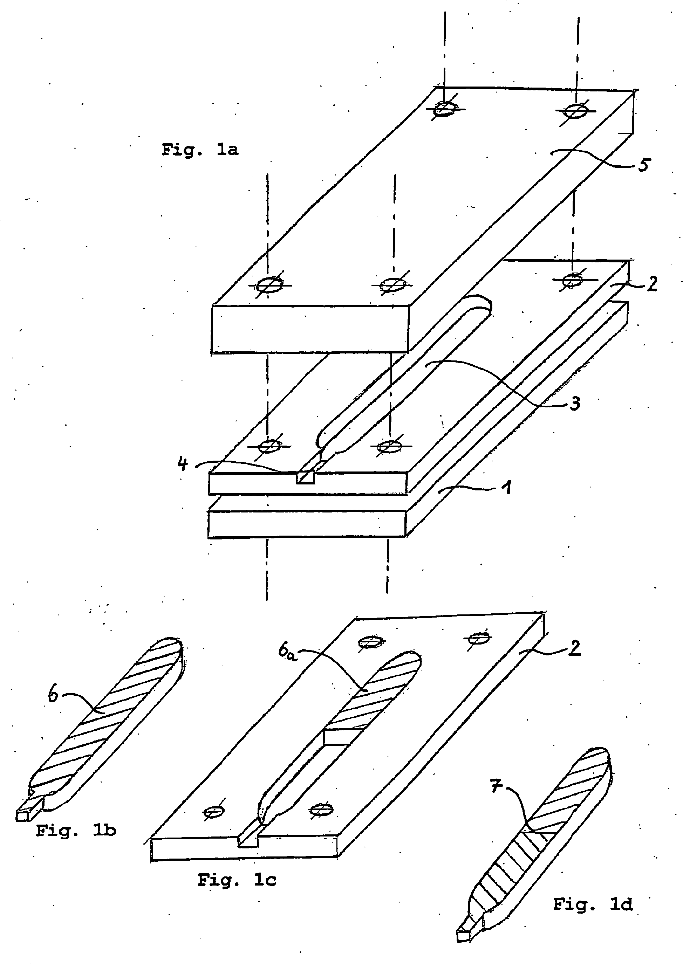

In ein Spritzgießwerkzeug gemäß Fig. 1a wird eine Heißgießmasse aus Al₂O₃-Pulver der Qualität CT3000SG (99,7 % Al₂O₃) (Hersteller ALCOA, Deutschland) und Bindemittel Siliplast LP65 (Zschimmer & Schwarz, Deutschland) eingespritzt. Der Pulvergehalt lag bei 62 Vol-%.

Die Probekörper für Biegestäbe wurden mit den Abmessungen 55*5*6 mm auf einer MIGL33 (Hersteller Peltsmann CORP, USA) gespritzt (erster Grünkörper). Das Spritzgusswerkzeug besteht aus der Grundplatte 1, der Mittelplatte 2 mit der Negativform des zu spritzenden Körpers 3 sowie dem Angusskanal 4 und der Deckplatte 5. Der spritzgegossene Probenkörper 6 gemäß Fig. 1b wird anschließend in der Mitte zu einem Halbkörper 6a aufgetrennt und erneut in das Werkzeug (Mittelplatte 2) gemäß Fig. 1c eingesetzt.

In einem zweiten Schritt wird der verbleibende Hohlraum in der Mittelplatte 2 gemäß Fig. 1c wiederum mit Spritzgussmasse gefüllt. Nach dem Erstarren (ca. 1-10 s) kann der so gefügte Biegestab 7 (zweiter Grünkörper) ausgeformt und den weiteren thermischen Behandlungen unterzogen werden (Entbindern, Sintern).

Die Entbinderung erfolgt vorzugsweise in einem Tonerde-Saugpulver, das eine höhere aktive Oberfläche als die im Grünkörper verarbeitete Tonerde hat. Die BET-Oberfläche des im Grünkörper verwendeten Pulvers liegt vorteilhaft bei 6 - 8 m²/g, die des Saugpulvers bei 12 - 22 m²/g.

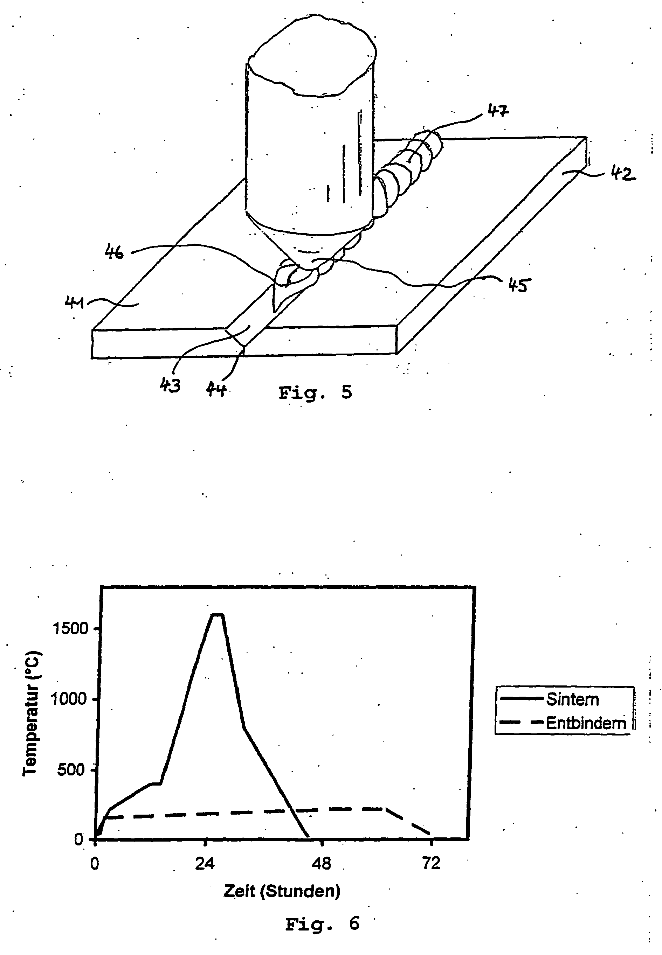

Die Entbinderung erfolgt bei einer Temperatur im Bereich von 50 bis 200 °C, beispielsweise mit einem Temperaturprogramm gemäß Fig. 6, und das anschließende Sintern ebenfalls mit einem Temperaturprogramm gemäß Fig. 6.

Die Festigkeiten der Biegestäbe wurden mittels der 4-Punkt Biegebruchmethode nach DIN 843-1 bestimmt. Die Biegefestigkeit liegt bei 210 MPa.

### Beispiel 2

In einer Bindersystem, bestehend aus 100 g Siliplast LP65, 20 g Bienenwachs und 2 g des Amins Ancamine 54®, werden unter Rühren und Ultraschalleinwirkung 853,8 g ZrO₂-Pulver mit einem d₅₀-Wert von 0,6 µm und 209 g plasmabehandeltes ZrO₂ mit einer aktiven Oberfläche von ca. 22 m²/g eingearbeitet (entspricht etwa einem d₅₀-Wert von 22 nm). Der Feststoffgehalt der Heißgießmasse beträgt 52 Vol-%.

Die aufbereitete Heißgießmasse wird bei Temperaturen von 75-95 °C gespritzt, und es werden wie im Beispiel 1 durch Anspritzen erfindungsgemäße zweite keramische Körper als Biegebruchproben geformt und gesintert. Nach Gefügeuntersuchungen entspricht das Gefüge der Nahtzone sowohl im Grünkörper als auch im fertigen gesinterten Körper exakt dem Gefüge in den restlichen Teilen des Körpers.

Temperaturprogramm beim Entbindern:
von 50 °C auf 160 °C in 15,75 h (7°C/h)
von 160 °C auf 220 °C in 12 h (5°C/h)
von 220 °C auf 400 °C in 12 h (15 °C/h)
von 400 auf 1050 °C in 26 h mit 3 h Haltezeit bei 1050 °C.
Temperaturprogramm beim Sintern:
Von Raumtemperatur auf 1050 °C mit 300 °C/h
Von 1050 °C auf 1530 °C mit 40 °C/h
1h Haltezeit bei 1530 °C.
Biegefestigkeit 220 Mpa.

In der folgenden beispielhaften Darstellung wird mit den gleichen Heißgießmassen wie oben näher erläutert gearbeitet.

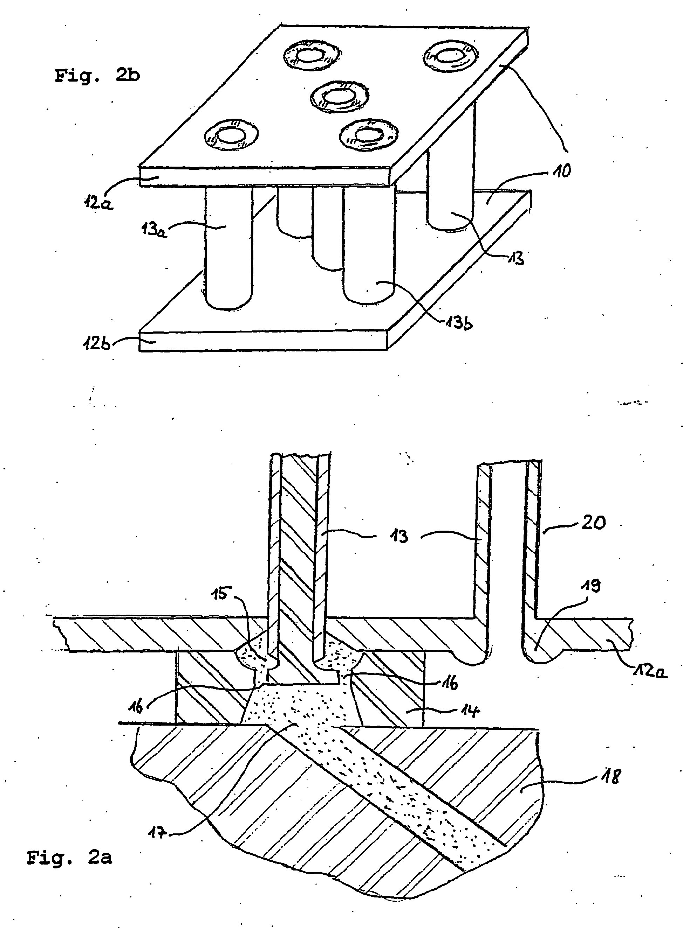

In Fig. 2a und 2b ist eine Ausführungsform der Erfindung beschrieben, bei der ein erster und ein zweiter fester Grünkörper zu einem dritten Grünkörper verbunden werden. Es wird die Herstellung einer Verbindung zwischen Rohr und Flansch gezeigt. Das Bauteil 10 gemäß Fig. 2b besteht aus zwei Flanschen 12a und 12b, die über eine Reihe von Rohren 13, 13a, 13b usw. miteinander verbunden sind. Zunächst werden die Flansche 12a und 12b sowie die einzelnen Rohre 13 spritzgegossen.

In Fig. 2a ist gezeigt, wie eine Verbindung zwischen Rohr und Flansch erzeugt wird. Hierzu wird ein Rohr 13 mit Hilfe des Werkzeugs 14 in der entsprechenden Aussparung des Flansches 12a positioniert. Das Werkzeug 14 besitzt einen ringförmigen Hohlraum 15, der über kleine Kanäle 16 mit einer Vorkammer 17 verbunden ist. Die Vorkammer 17 ist über der Austrittsdüse der Heißgießmaschine (schematisch in 18) platziert. Nach dem Erstarren der Heißgießmasse kann die Verbindung zwischen Vorkammer und Bauteil abgeschert werden, ohne dass hierbei die Ringnaht 19 beschädigt wird, die in einer weiteren bereits fertiggestellten Rohr/Flansch-Verbindung 20 eingezeichnet ist. Die Biegefestigkeit liegt bei 225 Mpa.

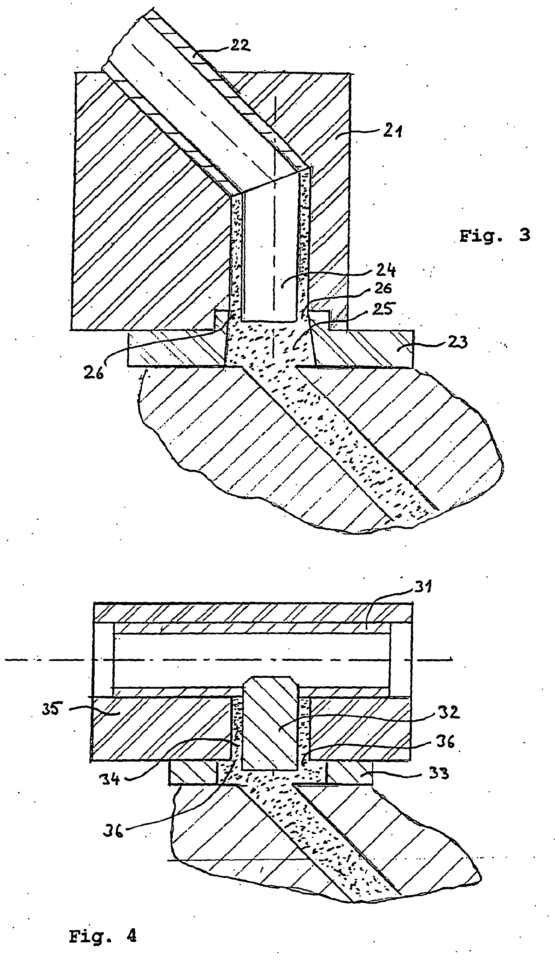

In Fig. 3 ist die erfindungsgemäße Herstellung von Rohrbögen beschrieben, wobei ein fertiger fester Grünkörper (erster Grünkörper) mittels einer angespritzten Heißgießmasse zu einem zweiten Grünkörper gestaltet wird.

Der Grundkörper des Werkzeuges 21 besitzt zwei Bohrungen, deren Achsen in dem gewünschten Winkel zueinander stehen. In die obere Bohrung wird das Rohrsegment 22 so eingesetzt, dass dessen Stirnfläche genau in der Verbindungsebene des Rohrbogens liegt. Die Angussplatte 23 ist mit einem Dorn 24 versehen, der ebenfalls genau in der Verbindungsebene des Rohrbogens endet. Über die Vorkammer 25 und die Angusskanäle 26 wird ein weiteres Rohrsegment 27 gespritzt, das sich mit dem vorhandenen Rohrsegment 22 verbindet. Die Biegefestigkeit liegt bei 240 MPa. Weitere Ausführungen der beschriebenen Anordnung ermöglichen es dem Techniker Rohrwendeln, U-förmige Teile etc. zu erzeugen.

Fig. 4 zeigt ein Werkzeug zur Herstellung eines T-förmigen Rohrknotens. Das mit einem passenden Durchbruch versehene Rohrsegment 31 wird so in den Grundkörper des Werkzeugs eingesetzt, dass der Dorn 32 der Angussplatte 33 den Durchbruch verschließt. Anschließend wird das fehlende Rohrsegment 34 gespritzt und durch Drehen des Grundkörpers 35 gegenüber der Angussplatte 33 im Bereich der Angusskanäle 36 abgetrennt.

In Fig. 5 werden Grünkörper 41 und 42 mit jeweils einer angephasten Kante, die eine Nut 43 bildet, an einer Kontaktfläche 44 zusammengebracht, und die aus der Spritzgussdüse 45 drucklos austretende Heißgießmasse 46 bildet eine schnell erkaltende "Schweißraupe" 47, die die Grünkörper 41 und 42 fest verbindet.

Aus Fig. 6 ist der Temperaturverlauf über die Zeit sowohl für das Entbindern im Temperaturbereich 20 bis 220 °C als auch für das Sintern eines aus hochreinem Al₂O₃ hergestellten Probekörpers gemäß Fig. 1a bis 1d dargestellt. Die Sinterung erfolgt hier im Bereich von 480 bis 1560 °C über einen Zeitraum von 10-20 Stunden einschließlich einer Abkühlphase.

Es versteht sich von selbst, dass mit dem beschriebenen Verfahren komplizierte Geometrien hergestellt werden können, besonders solche, die Hinterschneidungen aufweisen.

Werkzeugkosten können wesentlich verringert werden, weil nunmehr komplizierte Teile aus einfachen Geometrien aufgebaut werden können. Indem der Fügeprozess an Grünteilen durchgeführt wird, die noch das Bindemittel enthalten, wird die Handhabung der Teile wesentlich vereinfacht.

## Patentansprüche

1. Verfahren zur Herstellung von keramischen Formkörpern auf Basis sinterfähiger Pulver, **dadurch gekennzeichnet,**
**dass** man aus einer ersten Heißgießmasse einen ersten festen keramischen Körper bildet und an wenigstens eine Kontaktfläche des erkalteten ersten keramischen Körpers, der hochreines sinterfähiges Pulver mit einem Reinheitsgrad von > 99 Gew-%, bezogen auf das Pulver, und Bindemittel enthält, eine zweite Heißgießmasse mit gleicher Zusammensetzung wie die erste Heißgießmasse und mit einer Temperatur im Bereich von 60 bis 110 °C vollflächig andrückt,
den durch beide Heißgießmassen dabei gebildeten zweiten keramischen Körper nach Abkühlung und nach anschließender Entbinderung sintert, wobei der Teilchendurchmesser d₅₀ der Feststoffteilchen in beiden Heißgießmassen im Bereich von 0,1 bis kleiner 1 µm liegt.

2. Verfahren nach Anspruch 1, **dadurch gekennzeichnet,**
**dass** man die Heißgießmasse aus einem sinterfähigen Pulver, das eine Reinheit von wenigstens 99,0 % hat, und flüssigem Bindemittel bildet, und das Pulver in dem Bindemittel deagglomeriert vorliegt und dabei die fließfähige homogene Heißgießmasse bildet.

3. Verfahren nach Anspruch 1, **dadurch gekennzeichnet, dass** die Sinterung im Temperaturbereich von 1000 bis 2000 °C bis zu einem spannungsfreien, homogenen Gefüge geführt wird, dessen Festigkeit in der Fügezone der beiden Körper wenigstens 80 % der Festigkeit des ersten oder zweiten Körpers beträgt.

4. Verfahren nach Anspruch 1, **dadurch gekennzeichnet, dass** Heißgießmassen mit einem Feststoffgehalt an sinterfähigem Pulver im Bereich von 80 bis 90 Gew-% eingesetzt werden, bezogen auf das Gesamtgewicht der Masse.

5. Verfahren nach Anspruch 1, **dadurch gekennzeichnet, dass** die zweite Heißgießmasse mit einem Druck von 1 bis 50 bar, vorzugsweise 1 bis 10 bar, insbesondere 3 bis 8 bar angedrückt wird.

6. Verfahren nach Anspruch 1, **dadurch gekennzeichnet, dass** eine zweite Fläche eines weiteren festen keramischen Körpers aus sinterfähigem Pulver mit der Fläche des ersten festen keramischen Körpers wenigstens an einem Punkt oder an einer Kante in Kontakt gebracht wird und wobei der zwischen beiden Flächen und gegebenenfalls Wänden eines Formwerkzeugs gebildete Raum durch die in diesen Raum gedrückte Heißgießmasse ausgefüllt wird, und ein dabei aus beiden Körpern und der Heißgießmasse gebildeter dritter fester keramischer Körper nach der Abkühlung der Heißgießmasse und gegebenenfalls Entformung gesintert wird, wobei der erste und zweite keramische Körper und die Heißgießmasse die gleiche Zusammensetzung haben.

7. Verfahren nach Anspruch 1, **dadurch gekennzeichnet, dass** die Kontaktfläche des ersten keramischen Körpers wenigstens an einer Kante mit der Kontaktfläche eines weiteren keramischen Körpers in Berührung steht, und die Heißgießmasse den zwischen beiden Kontaktflächen gebildeten Raum ohne Formung durch ein Formwerkzeug ausfüllt, und der dabei gebildete vierte Körper nach der Abkühlung und Entbinderung gesintert wird, wobei die beiden keramischen Körper und die Heißgießmasse die gleiche Zusammensetzung haben.

8. Verfahren nach Anspruch 1, **dadurch gekennzeichnet, dass** sinterfähige Pulver mit einem Teilchendurchmesser d₅₀ von 0,01 bis 0,9 µm, vorzugsweise 0,1-0,6 µm eingesetzt werden.

9. Verfahren nach Anspruch 1, **dadurch gekennzeichnet, dass** das sinterfähige Pulver aus der Gruppe ausgewählt wird, bestehend aus Aluminiumoxid, Zirkoniumoxid, Magnesiumoxid, Siliciumnitrid, Aluminiumnitrid, Siliciumcarbid, Sialonen oder Gemischen davon, vorzugsweise aus Aluminiumoxid oder Zirkoniumoxid.

10. Verfahren nach Anspruch 1, **dadurch gekennzeichnet, dass** ein sinterfähiges Pulver mit einem Reinheitsgrad von wenigstens 99,2 bis 99,9 % eingesetzt wird, vorzugsweise 99,99 Gew-%, bezogen auf das Gesamtgewicht des Pulvers.

11. Verfahren nach einem der Ansprüche 1 bis 10, **dadurch gekennzeichnet, dass** als Bindemittel in den Heißgießmassen ein Gemisch eingesetzt wird, umfassend eine Substanz, ausgewählt aus der Gruppe, bestehend aus Paraffinen, C₁₂-C₂₂-Fettsäuren, Wachsen und Gemischen davon sowie gegebenenfalls einem oder mehreren Amin(en).

12. Verfahren nach einem der Ansprüche 1 bis 10, **dadurch gekennzeichnet, dass** die Entbinderung für Al₂O₃ und ZrO₂ auf 155-165 °C mit 6-8 °C/h, auf 210-225 °C mit 4-5 °C/h, auf 400 °C mit 13-17 °C/h, vorzugsweise auf 160 °C mit 7°C/h, auf 220 °C mit 15 °C/h und auf 400 °C mit 25 °C/h erfolgt, wobei eine zusätzliche Haltezeit von 2-4h bei 1040-1060 °C erfolgt, vorzugsweise 3h bei 1050 °C.

## Claims

1. A process for the production of ceramic moulded bodies on the basis of sinterable powder, **characterized in that**
a first solid ceramic body is formed from a first hot moulding compound, and a second hot moulding compound with the same composition as the first hot moulding compound and with a temperature ranging from 60 to 110°C is pressed with its full surface against at least one contact face of the cooled first ceramic body, which contains high-purity sinterable powder with a degree of purity of > 99 wt.%, relative to the powder, and binders, and
the second ceramic body formed by the two hot moulding compounds is sintered after cooling and subsequent debinding, wherein the particle diameter d₅₀ of the solid particles in both hot moulding compounds ranges from 0.1 to less than 1 µm.

2. The process according to claim 1, **characterized in that** the hot moulding compound is formed from a sinterable powder having a purity of less than 99.0% and from liquid binder, and the powder exists in a de-agglomerated state in the binder and forms the flowable homogeneous hot moulding compound.

3. The process according to claim 1, **characterized in that** the sintering is effected in the temperature range of 1000 to 2000°C until a tension-free, homogeneous structure is yielded whose strength in the joining zone of the two bodies is at least 80% of the strength of the first or second body.

4. The process according to claim 1, **characterized in that** hot moulding compounds are employed with a solids content of sinterable powder ranging from 80 to 90 wt.% in relation to the total weight of the compound.

5. The process according to claim 1, **characterized in that** the second hot moulding compound is pressed with a pressure of 1 to 50 bar, preferably 1 to 10 bar, especially 3 to 8 bar.

6. The process according to claim 1, **characterized in that** a second face of a further solid ceramic body of sinterable powder is brought into contact with at least one point or one edge of the face of the first solid ceramic body, wherein the space formed between the two faces and optionally between the walls of a moulding die is filled by the hot moulding compound pressed into this space, and a third solid ceramic body formed from the two bodies and the hot moulding compound is sintered after cooling of the hot moulding compound and optional demoulding, wherein the first and second ceramic bodies and the hot moulding compound have the same composition.

7. The process according to claim 1, **characterized in that** at least one edge of the contact face of the first ceramic body is in contact with the contact face of a further ceramic body, and the hot moulding compound fills the space formed between the two contact faces without moulding with a moulding die, and the fourth body formed therein is sintered after cooling and debinding, wherein the two ceramic bodies and the hot moulding compound have the same composition.

8. The process according to claim 1, **characterized in that** sinterable powders are employed with a particle diameter d₅₀ of 0.01 to 0.9 µm, preferably 0.1 to 0.6 µm.

9. The process according to claim 1, **characterized in that** the sinterable powder is selected from the group consisting of aluminium oxide, zirconium oxide, magnesium oxide, silicon nitride, aluminium nitride, silicon carbide, sialons and mixtures thereof, preferably of aluminium oxide or zirconium oxide.

10. The process according to claim 1, **characterized in that** a sinterable powder is employed with a degree of purity of at least 99.2 to 99.9%, preferably 99.99 wt.%, in relation to the total weight of the powder.

11. The process according to any of claims 1 to 10, **characterized in that** the binder employed in the hot moulding compounds is a mixture comprising a substance selected from the group consisting of paraffins, C₁₂-C₂₂ fatty acids, waxes and mixtures thereof and optionally of one or more amine(s).

12. The process according to any of claims 1 to 10, **characterized in that** debinding for Al₂O₃ and ZrO₂ is effected at 155-165°C with 6-8°C/h, at 210-225°C with 4-5°C/h, at 400°C with 13-17°C/h, preferably at 160°C with 7°C/h, at 220°C with 15°C/h and at 400°C with 25°C/h, with an additional holding time of 2-4 h at 1040-1060°C, preferably 3 h at 1050°C.

## Revendications

1. Procédé de fabrication de corps moulés céramiques à base de poudre frittable, **caractérisé en ce que** l'on forme un premier corps céramique solide à partir d'une première masse de moulage à chaud et que l'on presse sur toute la surface une deuxième masse de moulage à chaud de même composition que la première masse de moulage à chaud et avec une température située dans la plage allant de 60 à 110°C contre au moins une surface de contact du premier corps céramique refroidi, qui contient de la poudre frittable de grande pureté avec un degré de pureté > 99 % en poids, par rapport à la poudre, et du liant,
que l'on fritte le deuxième corps céramique formé par les deux masses de moulage à chaud après refroidissement et déliantage successif, le diamètre des particules dₛₒ des particules de matière solide dans les deux masses de moulage à chaud étant compris entre 0,1 et moins de 1 µm.

2. Procédé selon la revendication 1, **caractérisé en ce que** l'on forme la masse de moulage à chaud à partir d'une poudre frittable, qui a une pureté au moins égale à 99,0 %, et d'un liant liquide, et que l'on forme la poudre dans laquelle il y a du liant à l'état désaggloméré et ce faisant la masse de moulage à chaud homogène fluide.

3. Procédé selon la revendication 1, **caractérisé en ce que** le frittage est mené dans la plage de température allant de 1000 à 2000°C jusqu'à obtenir une structure homogène sans tension, dont la solidité dans la zone d'assemblage des deux corps est au moins égale à 80 % de la solidité du premier ou du deuxième corps.

4. Procédé selon la revendication 1, **caractérisé en ce que** des masses de moulage à chaud sont utilisées avec une teneur en matière solide en poudre frittable comprise dans la plage allant de 80 à 90 % en poids, par rapport au poids total de la masse.

5. Procédé selon la revendication 1, **caractérisé en ce que** la deuxième masse de moulage à chaud est pressée avec une pression de 1 à 50 bars, de préférence de 1 à 10 bars, en particulier de 3 à 8 bars.

6. Procédé selon la revendication 1, **caractérisé en ce qu'**une deuxième surface d'un autre corps céramique solide en poudre frittable est amenée en contact avec la surface du premier corps céramique solide au moins au niveau d'un point ou d'un bord et l'espace formé entre deux surfaces et le cas échéant parois d'un outil de formage étant rempli par la masse de moulage à chaud pressée dans cet espace, et un troisième corps céramique solide formé ce faisant à partir des deux corps et de la masse de moulage à chaud est fritté après refroidissement de la masse de moulage à chaud et démoulage le cas échéant, le premier et le deuxième corps céramique et la masse de moulage à chaud ayant la même composition.

7. Procédé selon la revendication 1, **caractérisé en ce que** la surface de contact du premier corps céramique touche au moins au niveau d'un bord la surface de contact d'un autre corps céramique et la masse de moulage à chaud remplit l'espace formé entre les deux surfaces de contact sans formage par un outil de formage et le quatrième corps ainsi formé est fritté après refroidissement et déliantage, les deux corps céramiques et la masse de moulage à chaud ayant la même composition.

8. Procédé selon la revendication 1, **caractérisé en ce que** des poudres frittables sont utilisées avec un diamètre de particules dₛₒ allant de 0,01 à 0,9 µm, de préférence de 0,1 à 0,6 µm.

9. Procédé selon la revendication 1, **caractérisé en ce que** la poudre frittable est choisie parmi le groupe composé d'oxyde d'aluminium, d'oxyde de zirconium, d'oxyde de magnésium, de nitrure de silicium, de nitrure d'aluminium, de carbure de silicium, de salions ou de mélanges de ces éléments, de préférence d'oxyde d'aluminium ou d'oxyde de zirconium.

10. Procédé selon la revendication 1, **caractérisé en ce qu'**une poudre frittable est utilisée avec un degré de pureté au moins compris entre 99,2 et 99,9 %, de préférence 99,99 % en poids par rapport au poids total de la poudre.

11. Procédé selon l'une quelconque des revendications 1 à 10, **caractérisé en ce qu'**un mélange, comprenant une substance choisie dans le groupe composé de paraffines, d'acides gras C₁₂-C₂₂, de cires et de mélanges de ces éléments ainsi que le cas échéant d'une ou de plusieurs amine(s), est utilisé comme liant dans les masses de moulage à chaud.

12. Procédé selon l'une quelconque des revendications 1 à 10, **caractérisé en ce que** le déliantage pour Al₂O₃ et ZrO₂ a lieu de préférence à 155-165°C avec 6-8°C/h, à 210-225°C avec 4-5°C/h, à 400°C avec 13-17°C/h, de préférence à 160°C avec 7°C/h, à 220°C avec 15°C/h et à 400°C avec 25°C/h, une durée de maintien supplémentaire de 2-4h à 1040-1060°C a lieu, de préférence de 3h à 1050°C.
